# EUROPÄISCHE PATENTSCHRIFT

(11) **EP 0 343 365 B1**
(45) Veröffentlichungstag und Bekanntmachung des Hinweises auf die Patenterteilung: **20.01.1993**
(21) Anmeldenummer: 89106787.8
(22) Anmeldetag: 15.04.1989
(51) Int. Cl.: B60T 8/44

(54) **Kraftfahrzeugbremsanlage**
Vehicle brake installation
Installation de freinage pour véhicules

(30) Priorität: 26.05.1988 DE 3817785
(43) Veröffentlichungstag der Anmeldung: 29.11.1989
(73) Patentinhaber: ALFRED TEVES GmbH, 60441 Frankfurt (DE)
(72) Erfinder: Schiel, Lothar, D-6238 Hofheim 6 (DE); Jakobi, Ralf, D-6237 Liederbach/Ts. (DE); Bauer, Jürgen, D-6200 Wiesbaden (DE)

(56) Entgegenhaltungen:
- DE-A- 1 780 667
- GB-A- 2 139 722
- US-A- 3 559 532

## Beschreibung

Die Erfindung betrifft eine Kraftfahrzeugbremsanlage mit einem wirkungsmäßig zwischen Bremspedal und Hauptbremszylinder angeordneten Vakuumbremskraftverstärker mit zumindest zwei durch eine bewegliche Wand voneinander getrennten Arbeitskammern, von denen die erste mit einer Vakuumquelle verbindbar und die zweite über ein mittels einer mit dem Bremspedal gekoppelten Kolbenstange betätigbaren Steuerventil belüftbar ist, um eine zur Bremspedalkraft proportionale Verstärkungskraft zu erzeugen, wobei an einen Primär- und einen Sekundärdruckraum des Hauptbremszylinders über Bremsleitungen Radbremszylinder angeschlossen sind, mit den zu bremsenden Rädern zugeordneten Sensoren, die das Drehverhalten der Räder erfassen, um ein Blockieren festzustellen, und deren Ausgangssignale einer zentralen Regelelektronik zuführbar sind, mit deren Steuersignalen zur Schlupfregelung in die Bremsleitungen eingefügte elektromagnetisch betätigbare Druckmittel- Einlaß-und Auslaßventile steuerbar sind.

Eine solche Bremsanlage ist z.B. aus der DE-OS 36 27 000 bekannt. Das Besondere an dieser bekannten, mit einem hydraulischen Hilfsdruck-Versorgungssystem arbeitenden Bremsanlage besteht darin, daß, um in einem Schlupfregelfall den vom Hauptbremszylinder erzeugten Bremsdruck schnell abbauen zu können, die Kolben des Hauptbremszylinders mit Zentral-Regel-Ventilen versehen sind, die in der Bremslösestellung Druckmittelverbindungen zwischen einem Druckmittelvorratsbehälter und den Druck- räumen des Hauptbremszylinders öffnen und in der Brems- stellung diese Druckmittelverbindungen schließen, wobei die Bremsleitungen über Einströmleitungen, in die Rückschlag- ventile eingeschaltet sind, mit den motorisch angetriebenen Pumpen des Hilfsdruck-Versorgungssystems in Verbindung stehen, deren Sauganschlüsse über eine Saugleitung an den Druckmittelvorratsbehälter angeschlossen sind.

Diese Bremsanlage verursacht jedoch einen beträchtlichen Konstruktionsaufwand, der zum Erzeugen und Steuern des hydraulischen Hilfsdruckes, zum Zurückhalten der Hauptbremszylinderkolben sowie zum Sicherstellen der Bremsfunktion beim Ausfall einzelner Bremskreise erforderlich ist.

Die Erfindung geht aus von einer schlupfgeregelten Kraftfahrzeugbremsanlage gemäß GB-A-2 139 722 aus, die die Merkmale des Oberbegriffs von Anspruch 1 aufweist.

Es ist daher Aufgabe der vorliegenden Erfindung, eine Bremsanlage der eingangs genannten Gattung so auszubilden, daß bei gleichzeitiger Erhöhung deren Betriebssicherheit eine erhebliche Senkung der erforderlichen Herstellungs- und Montagekosten erreicht wird. Weiterhin sollen nach jeder Schlupfregelung die Hauptzylinderkolben bzw. das Bremspedal vollständig zurückgestellt werden. Die Bremsanlage soll ein einfaches Antiblockier-System darstellen. Auch soll ein herkömmlicher Vakuumbremskraftverstärker eingesetzt werden können.

Diese Aufgaben werden erfindungsgemäß durch die Merkmale des kennzeichnenden Teiles von Anspruch 1 gelöst.

Weitere Merkmale, Vorteile und Anwendungsmöglichkeiten der Erfindung gehen aus den Unteransprüchen und der folgenden Beschreibung eines Ausführungsbeispiels anhand der beigefügten Zeichnung hervor. In der Zeichnung zeigt:
- Fig. 1: eine schematische Darstellung einer Kraftfahrzeugbremsanlage nach der Erfindung;
- Fig. 2: einen Schnitt durch ein Ausführungsbeispiel eines Vakuumbremskraftverstärkers,
- Fig. 3: eine Teildarstellung einer zweiten Ausführung des erfindungsgemäßen Vakuumbremskraftverstärkers im Axialschnitt und
- Fig. 4: eine diagrammatische Darstellung der Funktion der erfindungsgemäßen Kraftfahrzeugbremsanlage in einem Schlupfregelfall.

In den verschiedenen Figuren der Zeichnung sind einander entsprechende Bauteile mit gleichen Bezugszeichen bezeichnet.

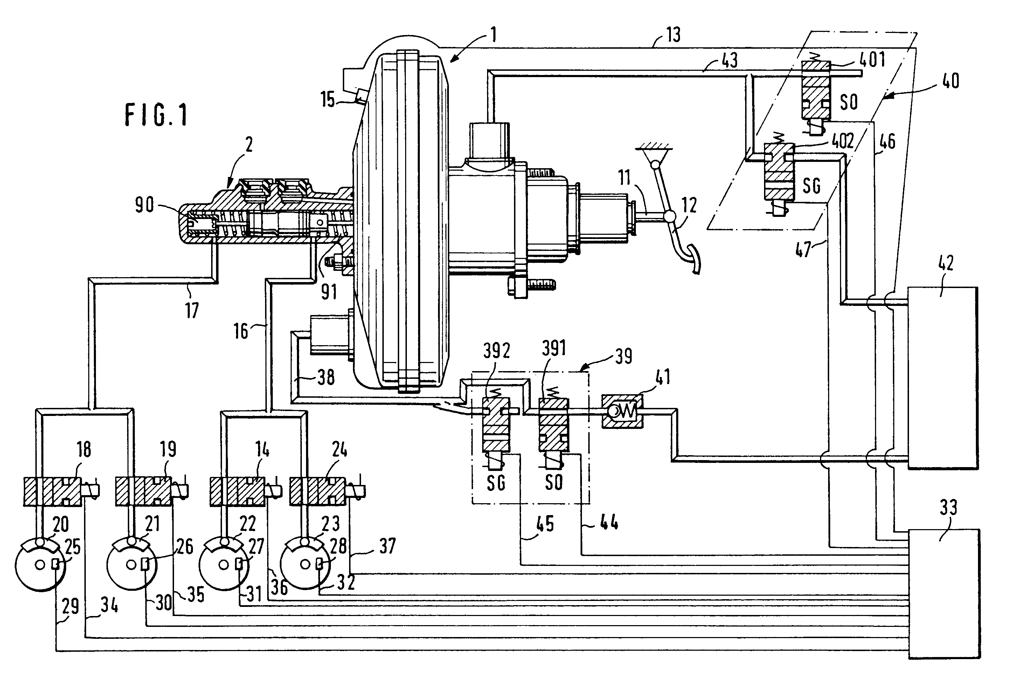

Fig. 1 zeigt eine Kraftfahrzeugsbremsanlage mit einem Vakuum-Bremskraftverstärker 1, der über eine Kolbenstange 11 in bekannter Weise mit einem Bremspedal 12 verbunden ist. Auf der der Kolbenstange 11 abgewandten Seite des Vakuum-Bremskraftverstärkers 1 ist ein Tandem-Hauptbremszylinder 2 vorgesehen, der mit einem nicht dargestellten Bremsflüssigkeitsbehälter in Verbindung steht. An die Druckräume 80,90 des Tandem-Hauptbremszylinders 2 ist ein erster und ein zweiter Bremskreis 17 bzw. 16 angeschlossen.

Der erste Bremskreis 17 verbindet über zwei Magnetventile 18,19, die als 2/2-Wegeventile ausgebildet sind, die Radbremszylinder der nur schematisch dargestellten zwei Radbremsen 20 bzw. 21 mit dem Tandem-Hauptbremszylinder 2. Jedes der beiden Magnetventile 18,19 ist hierbei einer der beiden Radbremsen 20 bzw. 21 zugeordnet. Der zweite Bremskreis 16 verbindet die Radbremszylinder der ebenfalls nur schematisch dargestellten weiteren zwei Radbremsen 22,23 mit dem Tandem-Hauptbremszylinder 2 über zwei weitere Magnetventile 14,24 die ebenfalls als 2/2-Wegeventile ausgebildet sind.

Den Vorder- und Hinterradbremsen 20,21,22 und 23 ist jeweils ein Sensor 25,26,27 bzw. 28 zugeordnet, die über ent- sprechende Signalleitungen 29,30,31 bzw. 32 mit einer zentralen Regelelektronik 33 verbunden sind. Die Sensoren 25,26,27 und 28, die beispielsweise als induktive Meßwertaufnehmer ausgebildet sein können, überwachen das Raddrehverhalten und liefern entsprechende Signale über die Signalleitungen 29,30,31 bzw. 32 an die Regelelektronik 33.

Die Regelelektronik 33 ist über Steuerleitungen 34,35,36,37 mit den Magnetventilen 18,19 bzw. 14,24 verbunden, um diese in Abhängigkeit von den Sensorsignalen zu betätigen.

An den Vakuumbremskraftverstärker 1 sind über pneumatische Leitungen 38,43 pneumatische Mittel - Ventilanordnungen 39,40 angeschlossen, die in Abhängigkeit von den Steuersignalen der Regelelektronik 33 ein Evakuieren bzw. Belüften näher nicht bezeichneter Arbeitskammern des Vakuumbremskraftverstärkers 1 ermöglichen. Die erste Ventilanordnung 39 wird durch zwei 2/2-Wegeventile 391,392 gebildet, die mittels Steuerleitungen 44,45 mit der Regelelektronik 37 in Verbindung stehen.

Das die Atmosphäre schaltende 2/2-Wegeventil 392 ist vorzugsweise als stromlos geschlossenes Elektromagnetventil ausgebildes, während als das das Vakuum schaltendes 2/2-Wegeventil 391 ein stromlos offenes Elektromagnetventil verwendet wird, dessen Eingang über ein Rückschlagventil 41 an eine Vakuumquelle 42 angeschlossen ist.

An die Vakuumquelle 42 ist auch ein zweites Vakuum schaltenden, stromlos geschlossenes 2/2-Wegeventil 402 der zweiten Ventilanordnung 40 angeschlossen, das über eine dritte Steuerleitung 47 durch die zentrale Regelelektronik 33 erregbar ist. Die zweite Ventilanordnung 40 umfaßt schließlich noch ein zweites, die Atmosphäre schaltendes 2/2-Wegeventil 401, das als stromlos offenes Elektromagnetventil ausgebildet ist und über eine vierte Steuerleitung 46 mit der Regelelektronik 33 verbunden ist.

An eine der beiden Arbeitskammern des Vakuumbremskraftverstärkers 1 ist schließlich ein Drucksensor 15 angeschlossen, dessen Ausgangssignal über eine Signalleitung 13 der zentralen Regelelektronik 33 zugeführt wird.

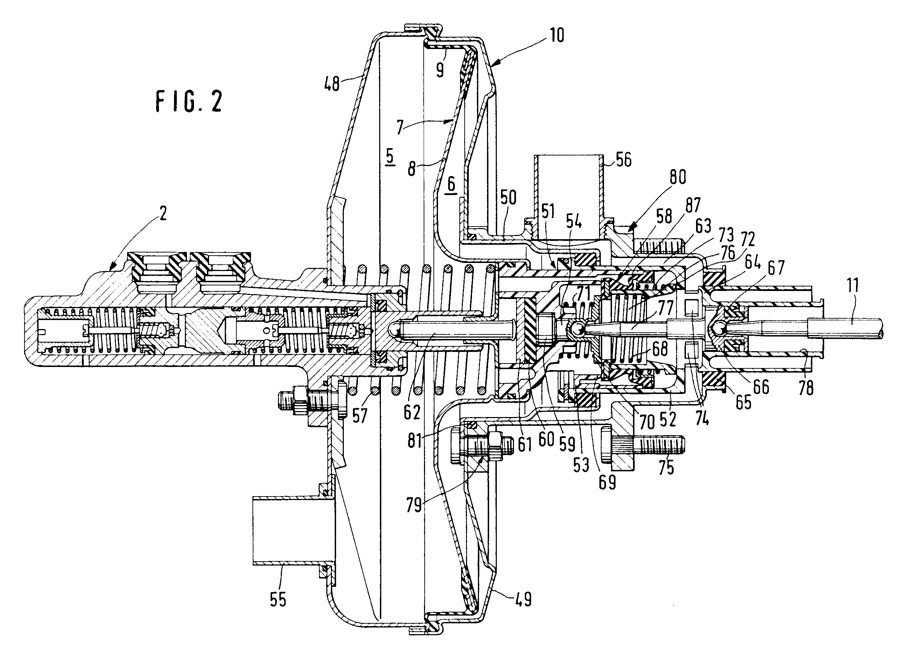

Nach Fig. 2 weist der Vakuumbremskraftverstärker 1 zwei schalenförmige, mit ihren offenen Seiten zusammengebaute Gehäuseteile 48,49 auf, die ein Verstärkergehäuse 10 bilden. Das in Fig. 2 linke mit einem pneumatischen Anschluß 55 versehene Gehäuseteil 48 ist fest mit dem Tandem-Hauptbremszylinder 2 verbunden, während das rechte Gehäuseteil 49 einen zentralen Führungsstutzen 50 aufweist, der ein Steuerventilgehäuse 51 des Vakuum-Bremskraftverstärkers 1 gleitend und vakuumdicht geführt hält. Das Steuerventilgehäuse 51 besitzt ein hinteres Steuergehäuseteil 52, das sich aus dem VakuumBremskraftverstärker 1 in Richtung des Bremspedals 12 hinaus erstreckt, sowie ein vorderes Steuergehäuseteil 53, das im wesentlichen innerhalb des Vakuumbremskraftverstärkers 1 angeordnet ist.

Der Innenraum des Verstärkergehäuses 10 wird durch eine darin angeordnete, aus einem Membranteller 8 und einer daran anliegenden Rollmembran 9 bestehende, bewegliche Wand 7 in eine erste Arbeitskammer 5 sowie eine zweite Arbeitskammer 6 unterteilt, die bei einer Normalbremsung mittels einer im Steuerventilgehäuse 51 angeordneten Ventilanordnung 58 belüftet wird. Die an sich bekannte Ventilanordnung 58 wird von einem mit der Kolbenstange 11 verbundenen Ventilkolben 54 betätigt, der die über das Bremspedal 12 eingeleitete Betätigungskraft über eine Übersetzungsscheibe 59, eine gummielastische Reaktionsscheibe 60 und eine Druckplatte 61 auf ein Kraftabgabeglied - Druckstange 62 - überträgt. Zum Zurückstellen der beweglichen Wand 7 ist eine Rückstellfeder 57 vorgesehen, die zwischen dem vorderen Gehäuseteil 48 und dem Membranteller 8 eingespannt ist.

An dem bremspedalseitigen Gehäuseteil 49 des Verstärkergehäuses 10 ist mittels Schraubenverbindungen 79 unter Zwischenschaltung einer Dichtung 81 ein Flansch 80 befestigt, der einen pneumatischen Anschluß 56 aufweist, an den die von der zweiten Ventilanordnung 40 führende pneumatische Leitung 43 angeschlossen ist. Das hintere Steuergehäuseteil 52 ist vorzugsweise mit einer axialen Verlängerung 64 versehen, die im Flansch 80 mittels eines Dichtringes 65 abgedichtet axial geführt ist. Der Befestigungselemente 75 für eine Kraftfahrzeug-Karosseriewand tragende Flansch 80 begrenzt mit dem hinteren Steuergehäuseteil 52 einen pneumatischen Raum 63, der in Abhängigkeit von den Steuersignalen der zentralen Regelelektronik 33 belüftbar bzw. evakuierbar ist.

Um den Innenraum 76 der an sich bekannten, im Steuerventilgehäuse 51 angeordneten Ventilanordnung 58 mit dem im Raum 63 herrschenden pneumatischen Druck beaufschlagen zu können, weist der Übertragungsbereich zwischen dem hinteren Steuergehäuseteil 52 und dessen axialer Verlängerung 64 radiale Durchbrüche 74 auf.

Die aus einem am vorderen Steuergehäuseteil 83 ausgebildeten ersten Dichtsitz 69, einen am Ventilkolben 54 ausgebildeten zweiten Dichtsitz 70 sowie einem in der Schließrichtung mittels einer Ventilfeder 68 vorgespannten Tellerventil 87 bestehende Ventilanordnung 58 wird unmittelbar mittels einer Zwischenstange 77 betätigt, deren pedalseitiges Ende einen Führungsbund 66 aufweist, der in einer Bohrung 78 in der axialen Verlängerung 64 geführt ist. Für die Abdichtung des Führungsbundes 66 sorgt eine an der Wandung der Bohrung 78 gleitende Dichtmanschette 67, die Bohrung mit dem Bremspedal 12 gekoppelte Kolbenstange 11 an dem pedalseitigen Ende der Zwischenstange 77 gelagert ist. Das Tellerventil 87 ist innerhalb des Steuerventilgehäuses 51 mittels eines sich am hinteren Steuergehäuseteil 52 abstützenden Führungselementes 72 geführt, an dem sich eine Druckfeder 73 abstützt, die den Außenrand des Tellerventils 87 in Richtung auf den vorderen Steuergehäuseteil 53 zu vorspannt. Zwischen dem Ventilkolben 54 und dem vorderen Steuergehäuseteil 53 ist schließlich eine Kolbenrückholfeder 71 angeordnet, die die Ansprechkraft des Vakuumbremskraftverstärkers 1 bestimmt.

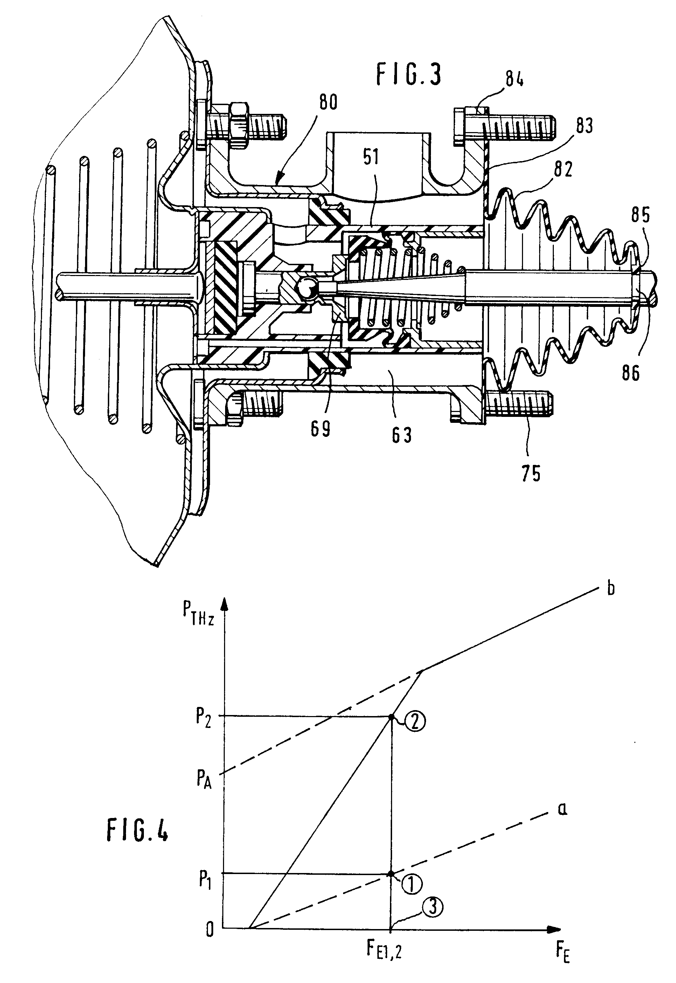

Die in Fig. 3 gezeigte Steuergruppe unterscheidet sich von der in Fig. 2 dargestellten vor allem dadurch, daß das Steuerventilgehäuse 51 einteilig ausgebildet ist, wobei der erste Dichtsitz 69 in Lösestellung des Vakuumbremskraftverstärkers 1 in einem Abstand vom Tellerventil 87 angeordnet ist, der als Leerweg des Gerätes bezeichnet wird. Der belüftbare bzw. evakuierbare Raum 63 ist nach außen hin mittels eines am Flansch 86 befestigten Faltenbalges 82 abgedichtet, dessen symmetrisch gegenüberliegend ausgebildete radiale Befestigungsbereich 83 mit den Befestigungselementen 75 in dem Sinne zusammenwirken, daß die Befestigungselemente 75 sich durch in den Befestigungsbereichen 83 ausgebildete Durchtrittsöffnungen 84 hindurch erstrecken, um bei der Montage mit der Karosseriewand verschraubt zu werden. Der Faltenbalg 82 weist an seinem dem Flansch 80 abgewandten Ende einen Ringwulst 85, der in einer in der Kolbenstange 11 ausgebildeten Radialnut 86 eingeknöpft ist.

Die Funktionsweise der in der Zeichnung dargestellten erfindungsgemäßen Kraftfahrzeugbremsanlage wird nachfolgend beschrieben:
Bei gelösten Bremsen, also im unbetätigten Zustand des Vakuumbremskraftverstärkers 1 sind dessen beide Arbeitskammern 5,6 evakuiert, so daß in ihnen die gleichen Druckverhältnisse herrschen. Das Evakuieren der hauptzylinderseitigen Arbeitskammer 5 erfolgt mittels der Vakuumquelle 42 über das stromlos offene 2/2-Wegeventil 391 während das Evakuieren der pedalseitigen Arbeitskammer 6 über das Steuerventil 58 erfolgt. Der belüftbare bzw. evakuierbare Raum 63 wird mit dem Atmosphärendruck beaufschlagt, der ber die pneumatische Leitung 43 und das stromlos offene 2/2-Wegeventil 401 zugeführt wird.

Wird nun beim Bremsen das Bremspedal 12 betätigt, so werden durch die Krafteinwirkung die Kolbenstange 11 mit dem Ventilkolben 54 nach links verschoben, wodurch das Steuerventil 58 betätigt wird. Dadurch wird an der beweglichen Wand 7 eine fußkraftproportionale Druckdifferenz eingesteuert, die eine Verstärkungskraft erzeugt, die zur Pedalkraft hinzuaddiert und über die Druckstange 62 auf den Primärkolben 81 des Hauptbremszylinders 2 übertragen wird, um einen hydraulischen Druck in den beiden Druckräumen 80 und 90 aufzubauen, der über die Bremskreise 16 und 17 zu den einzelnen Radbremsen 20,21,22 und 23 weitergeleitet wird.

Das Betätigen und Lösen der Bremsen funktioniert somit wie bei einem bekannten Vakuumbremskraftverstärker.

Wird während eines Bremsvorganges von einem oder mehreren der Sensoren 25,26,27,28 ein Blockieren des zugeordneten Rades festgestellt, so muß der im Hauptbremszylinder 2 aufgebaute Druck zumindest teilweise abgebaut werden. Es wird angenommen, daß die auf das Bremspedal 12 einwirkende Kraft konstant bleibt. Dieser Zustand wird durch den Punkt 2 im Diagramm nach Fig. 4 dargestellt, in dem die Kurve a die darin dargestellte Abhängigkeit ohne, die Kurve b die gleiche Abhängigkeit mit Verstärkungskraft des Vakuumbremskraftverstärkers 1 zeigt. Nach dem der zentralen Regelelektronik 33 von einem der Sensoren die oben erwähnte Blockierneigung gemeldet wurde, erzeugt diese Umschaltsignale, die ein gleichzeitiges Umschalten der beiden 2/2-Wegeventile 391,392 der ersten Ventilanordnung 39 und somit ein Belüften der hauptbremszylinderseitigen Arbeitskammer 5 des Vakuumbremskraftverstärkers 1 bewirken. Da nunmehr auf die bewegliche Wand 7 keine Druckdifferenz einwirkt, (die bremspedalseitige Arbeitskammer 6 steht nach wie vor unter dem Atmosphärendruck) verschwindet auch die dadurch bedingte Verstärkungskraft. Die beschriebene Wegnahme der Verstärkungskraft hat demnach eine Druckreduzierung im Hauptbremszylinder 2 zur Folge (Punkt 1 im Diagramm in Fig. 4.) Nach dem vollständigen Belüften der hauptbremszylinderseitigen Arbeitskammer 5 teilt der Drucksensor 15 der zentralen Regelelektronik 33 mit, daß für einen weiteren Druckabbau lediglich ein Umschalten der zweiten Ventilanordnung 40 zu erfolgen hat.

Soll der Hauptbremszylinderdruck vollständig abgebaut werden (Punkt 3), so erfolgt ein Umschalten der 2/2-Wegeventile 401,402 der zweiten Ventilanordnung 40. Durch Evakuieren des pneumatischen Raumes 63 bzw. der bremspedalseitigen Arbeitskammer 6 entsteht an der beweglichen Wand 7 eine entgegen der am Bremspedal 12 eingeleiteten Fußkraft wirkende Verstärkungskraft, die einem vollständigen Abbau der Ausgangskraft des Vakuumbremskraftverstärkers 1 bzw. des im Hauptbremszylinder 2 herrschenden hydraulischen Druckes bewirkt.

Das Auftreten einer Schlupfregelphase wird dem Fahrer durch ein Pulsieren des Bremspedals direkt mitgeteilt.

### Bezugszeichenliste

- 1: Vakuumbremskraftverstärker
- 2: Hauptbremszylinder
- 3:
- 4:
- 5: Vakuumkammer
- 6: Arbeitskammer
- 7: bewegliche Wand
- 8: Membranteller
- 9: Rollmembran
- 10: Verstärkergehäuse
- 11: Betätigungsstange
- 12: Bremspedal
- 13: Signalleitung
- 14: Magnetventil
- 15: Drucksensor
- 16: Bremsleitung
- 17: Bremsleitung
- 18: Magnetventil
- 19: Magnetventil
- 20: Radbremse
- 21: Radbremse
- 22: Radbremse
- 23: Radbremse
- 24: Magnetventil
- 25: Sensor
- 26: Sensor
- 27: Sensor
- 28: Sensor
- 29: Signalleitung
- 30: Signalleitung
- 31: Signalleitung
- 32: Signalleitung
- 33: zentrale Regelelektronik
- 34: Steuerleitung
- 35: Steuerleitung
- 36: Steuerleitung
- 37: Steuerleitung
- 38: pneumatische Leitung
- 39: erste Ventilanordnung
- 40: zweite Ventilanordnung
- 41: Rückschlagventil
- 42: Vakuumquelle
- 43: pneumatische Leitung
- 44: Steuerleitung
- 45: Steuerleitung
- 46: Steuerleitung
- 47: Steuerleitung
- 48: Gehäuseteil
- 49: Gehäuseteil
- 50: Führungsstutzen
- 51: Steuergehäuse
- 52: Steuergehäuseteil
- 53: Steuergehäuseteil
- 54: Ventilkolben
- 55: pneumatischer Anschluß
- 56: pneumatischer Anschluß
- 57: Rückstellfeder
- 58: Ventilanordnung
- 59: Übersetzungsscheibe
- 60: Reaktionsscheibe
- 61: Druckplatte
- 62: Kraftabgabeglied
- 63: Raum
- 64: Verlängerung
- 65: Dichtring
- 66: Führungsbund
- 67: Dichtmanschette
- 68: Feder
- 69: erster Dichtsitz
- 70: zweiter Dichtsitz
- 71: Druckfeder
- 72: Führungslement
- 73: Druckfeder
- 74: Durchbruch
- 75: Befestigungselement
- 76: Innenraum
- 77: Zwischenstange
- 78: Bohrung
- 79: Schraubverbindung
- 80: Flansch
- 81: Dichtung
- 82: Faltenbalg
- 83: Befestigungsbereich
- 84: Durchtrittsöffnung
- 85: Ringwulst
- 86: Radialnut
- 87: Tellerventil

## Patentansprüche

1. Kraftfahrzeugbremsanlage mit einem wirkungsmäßig zwischen Bremspedal (12) und Hauptbremszylinder (2) angeordneten Vakuumbremskraftverstärker (1) mit zumindest zwei durch eine bewegliche Wand (7) voneinander getrennten Arbeitskammern (5,6), von denen die erste mit einer Vakuumquelle (42) verbindbar und die zweite über ein mittels einer mit dem Bremspedal (12) gekoppelten Kolbenstange (11) betätigbaren Steuerventil (87) belüftbar ist, um eine zur Bremspedalkraft proportionale Verstärkungskraft zu erzeugen, wobei an einen Primär- und einen Sekundärdruckraum des Hauptbremszylinders (2) über Bremsleitungen (16,17) Radbremszylinder (20,21,22,23) angeschlossen sind, mit den zu bremsenden Rädern zugeordneten Sensoren (25,26,27,28), die das Drehverhalten der Räder erfassen, um ein Blockieren festzustellen, und deren Ausgangssignale einer zentralen Regelelektronik (33) zuführbar sind, mit deren Steuersignalen zur Schlupfregelung in die Bremsleitungen (16,17) eingefügte elektromagnetisch betätigbare Druckmittel-Einlaß- und -Auslaßventile (18,19,14,24) steuerbar sind, wobei pneumatische Mittel (39,40) vorgesehen sind, die in einem Schlupfregelfall ein Belüften der ersten Arbeitskammer (5) und/oder ein Evakuieren der zweiten Arbeitskammer (6) ermöglichen, um die Verstärkungskraft des Vakuumbremskraftverstärkers (1) in einer der Betätigungsrichtung des Hauptbremszylinders (2) entgegengesetzten Richtung wirksam bzw. unwirksam werden zu lassen dadurch **gekennzeichnet,** daß die pneumatischen Mittel (40) an die zweite Arbeitskammer (6) mittels eines am Verstärkergehäuse (10) vorgesehenen Flansches (80) angeschlossen sind, der mit einem pneumatischen Anschluß (56) versehen ist und mit dem Verstärkergehäuse (10) sowie einem Steuerventilgehäuse (51) einen belüftbaren und evakuierbaren Raum (63) begrenzt.

2. Kraftfahrzeugbremsanlage nach Anspruch 1 dadurch **gekennzeichnet**, daß die pneumatischen Mittel (39,40) durch je zwei 2/2-Wegeventile (391,392 bzw. 401,402) gebildet sind, die durch Steuersignale der zentralen Regelelektronik (33) erregbar sind.

3. Kraftfahrzeugbremsanlage nach Anspruch 2 dadurch **gekennzeichnet**, daß die 2/2-Wegeventile (391,392,401,402) als stromlos offene (391,401) und stromlos geschlossene Elektromagnetventile (392,402) ausgebildet sind.

4. Kraftfahrzeugbremsanlage nach Anspruch 1 dadurch **gekennzeichnet**, daß die pneumatischen Mittel (39,40) durch je ein an je eine der beiden Arbeitskammern (5 bzw. 6) angeschlossenes elektromagnetisches 3/2-Wegeventil gebildet sind.

5. Kraftfahrzeugbremsanlage nach Anspruch 1 dadurch **gekennzeichnet**, daß der Flansch (80) Befestigungsmittel (75) für eine Karosseriewand trägt.

6. Kraftfahrzeugbremsanlage nach Anspruch 1 oder 5 dadurch **gekennzeichnet**, daß das Steuerventilgehäuse (51) eine axiale Verlängerung (64) aufweist, die im Flansch (80) abgedichtet geführt ist.

7. Kraftfahrzeugbremsanlage nach Anspruch 6, dadurch **gekennzeichnet**, daß die axiale Verlängerung (64) eine Bohrung (78) aufweist, in der ein Führungsbund (66) einer das Steuerventil (58) direkt betätigenden Zwischenstange (77) abgedichtet verschiebbar geführt ist, der mit der Kolbenstange (11) in wirksamer Verbindung steht.

8. Kraftfahrzeugbremsanlage nach Anspruch 6 oder 7, dadurch **gekennzeichnet**, daß die axiale Verlängerung (64) einteilig mit dem Steuerventilgehäuse (51 bzw. 52) ausgebildet ist, wobei in dem Übergangsbereich zwischen dem Steuerventilgehäuse (52) und der Verlängerung (64) Durchbrüche (74) vorgesehen sind, die eine pneumatische Beaufschlagung des Innenraumes (76) des Steuerventils (58) mit dem im Raum (63) herrschenden Druck ermöglichen.

9. Kraftfahrzeugbremsanlage nach Anspruch 7, dadurch **gekennzeichnet**, daß der Führungsbund (66) gegenüber der Wandung der Bohrung (78) mittels einer Dichtmanschette (67) abgedichtet ist.

10. Kraftfahrzeugbremsanlage nach Anspruch 1 oder 5, dadurch **gekennzeichnet**, daß der Flansch (80) am Verstärkergehäuse (10) unter Zwischenschaltung einer Dichtung (81) mittels Schraubenverbindungen (79) befestigt ist.

11. Kraftfahrzeugbremsanlage nach Anspruch 1 oder 5, dadurch **gekennzeichnet**, daß der Raum (63) von der Umgebungsatmosphäre durch einen Faltenbalg (82) getrennt wird, der sich zwischen dem Flansch (80) und der Kolbenstange (11) erstreckt.

12. Kraftfahrzeugbremsanlage nach Anspruch 11, dadurch **gekennzeichnet**, daß der Faltenbalg (82) mindestens zwei, symmetrisch gegenüberliegend ausgebildete radiale Befestigungsbereiche (83) aufweist, die mit dem am Flansch (80) angebrachten Befestigungselementen (75) zusammenwirken.

13. Kraftfahrzeugbremsanlage nach Anspruch 12, dadurch **gekennzeichnet**, daß die Befestigungsbereiche (83) Durchtrittsöffnungen (84) für die Befestigungselemente (75) aufweisen.

14. Kraftfahrzeugbremsanlage nach Anspruch 11 bis 13, dadurch **gekennzeichnet**, daß der Faltenbalg (82) an seinem dem Flansch (80) abgewandten Ende einen Ringwulst (85) aufweist, der in eine in der Kolbenstange (11) ausgebildete Radialnut (86) einknöpfbar ist.

15. Kraftfahrzeugbremsanlage nach einem der vorhergehenden Ansprüche, dadurch **gekennzeichnet**, daß an eine der beiden Arbeitskammern (5,6) ein Drucksensor (15) angeschlossen ist, dessen Ausgangssignal der zentralen Regelelektronik (33) zuführbar ist.

## Claims

1. An automotive vehicle braking unit with a vacuum brake power booster (1) being arranged between the brake pedal (12) and the master brake cylinder (2) as to its action and furnished with at least two power chambers (5, 6) being divided from each other by a movable wall (7), the first one of said power chambers being connectible to a vacuum source (42) and the second one being ventable through a control valve (87) actuatable by means of a piston rod (11) coupled with the brake pedal (12), in order to generate a boosting power which is proportional to the brake pedal force, wheel brake cylinders (20, 21, 22, 23) being connected through brake lines (16, 17) to a primary and a secondary pressure chamber of the master brake cylinder (2), with sensors (25, 26, 27, 28) associated with the wheels to be braked and detecting the rotating behaviour of the wheels in order to find out any locking, and whose output signals are transmittable to a central electronic control system (33) by whose control signals pressure fluid inlet and outlet valves (18, 19, 14, 24) are controllable which are electromagnetically actuatable and are inserted in the brake lines (16, 17) for the purpose of slip control, pneumatic means (39, 40) being provided which afford venting of the first power chamber (5) and/or evacuation of the second power chamber (6) in the event of a slip control action in order to render the boosting power of the vacuum brake power booster (1) effective or ineffective in a direction opposed to the direction of actuation of the master brake cylinder (2),
**characterized** in that the pneumatic means (40) are connected to the second power chamber (6) by means of a flange (80) being provided at the booster housing (10) and being furnished with a pneumatic connection (56) and confining a ventable and evacuatable chamber (63) jointly with the booster housing (10) and with a control valve housing (51).

2. An automotive vehicle braking unit as claimed in claim 1,
**characterized** in that the pneumatic means (39, 40) are formed by two each 2/2-way valves (391, 392, respectively 401, 402) which are energizable by control signals of the central electronic control system (33).

3. An automotive vehicle braking unit as claimed in claim 2,
**characterized** in that the 2/2-way valves (391, 392, 401, 402) are configurated as electromagnetic valves, open when de-energized (391, 401) and closed when de-energized (392, 402).

4. An automotive vehicle braking unit as claimed in claim 1,
**characterized** in that the pneumatic means (39, 40) are formed by one each electromagnetic 3/2-way valve being connected to one each of the two power chambers (5, respectively 6).

5. An automotive vehicle braking unit as claimed in claim 1,
**characterized** in that the flange (80) bears fixation elements (75) for a wall of the vehicle body.

6. An automotive vehicle braking unit as claimed in claim 1 or 5,
**characterized** in that the control valve housing (51) presents an axial extension (64) which is guided in a sealed manner within the flange (80).

7. An automotive vehicle braking unit as claimed in claim 6,
**characterized** in that the axial extension (64) is formed with a bore (78) in which a guide collar (66) of an intermediate rod (77) directly actuating the control valve (58) is slidably guided in a sealed manner, which said guide collar (66) is in operative connection with the piston rod (11).

8. An automotive vehicle braking unit as claimed in claim 6 or 7,
**characterized** in that the axial extension (64) is of integral design with the control valve housing (51, respectively 52), openings (74) being provided in the transition range between the control valve housing (52) and the extension (64) which afford to pneumatically subject the interior space (76) of the control valve (58) to the pressure prevailing within the chamber (63).

9. An automotive vehicle braking unit as claimed in claim 7,
**characterized** in that the guide collar (66) is sealed with respect to the wall of the bore (78) by means of a sealing sleeve (67).

10. An automotive vehicle braking unit as claimed in claim 1 or 5,
**characterized** in that the flange (80) is fastened to the booster housing (10) by means of screwed joints (79), with a seal (81) being interposed.

11. An automotive vehicle braking unit as claimed in claim 1 or 5,
**characterized** in that the chamber (63) is sealed off towards the ambient atmosphere by means of a boot (82) extending between the flange (80) and the piston rod (11).

12. An automotive vehicle braking unit as claimed in claim 11,
**characterized** in that the boot (82) is formed with at least two radial ranges of fixation (83) being configurated symmetrically opposite each other and interacting with the fixation elements (75) provided at the flange (80).

13. An automotive vehicle braking unit as claimed in claim 12,
**characterized** in that the ranges of fixation (83) present passage openings (84) for the fixation elements (75).

14. An automotive vehicle braking unit as claimed in claim 11 to 13,
**characterized** in that at its end facing away from the flange (80) the boot (82) is formed with a torus (85) which is insertable in a radial groove (86) being configurated in the piston rod (11).

15. An automotive vehicle braking unit as claimed in any one of the preceding claims,
characterized in that a pressure sensor (15) whose output signal is transmittable to the central electronic control system (33) is connected to one of the two power chambers (5, 6).

## Revendications

1. Système de freinage pour véhicule automobile, comprenant, d'une part, un amplificateur d'effort de freinage à dépression (1) disposé, de façon à coopérer avec eux, entre une pédale de frein (12) et un maître-cylindre de frein (2) et comportant au moins deux chambres de travail (5, 6) qui sont séparées l'une de l'autre par une paroi mobile (7) et dont la première est agencée de façon à pouvoir être reliée à une source de dépression (42) et la seconde est agencée de façon à pouvoir être mise à l'atmosphère par l'intermédiaire d'une valve de commande (87) agencée de façon à pouvoir être actionnée au moyen d'une tige de piston (11) accouplée à la pédale de frein (12), en vue de produire une force d'amplification proportionnelle à la force exercée sur la pédale de frein, tandis que des cylindres de freins de roues (20, 21, 22, 23) sont raccordés à une chambre de pression primaire et une chambre de pression secondaire du maître-cylindre de frein (2) par l'intermédiaire de conduites de freinage (16,17), et, d'autre part, des capteurs (25, 26, 27, 28), associés aux roues à freiner, qui relèvent le comportement des roues en rotation, en vue d'établir l'existence d'un blocage, et dont des signaux de sortie peuvent être envoyés à un circuit électronique central de régulation (33), des signaux de commande de ce dernier permettant de commander des valves d'entrée et de sortie d'agent de pression (18, 19, 14, 24), à commande électromagnétique, insérées dans les conduites de freinage (16, 17) en vue de la régulation du glissement, tandis qu'il est prévu des moyens pneumatiques (39, 40) qui, dans un cas de régulation de glissement, permettent une mise à l'atmosphère de la première chambre de travail (5) et/ou une mise en dépression de la seconde chambre de travail (6), afin de rendre la force d'amplification de l'amplificateur d'effort de freinage à dépression (1) active ou inactive dans une direction opposée à la direction d'actionnement du maître-cylindre de frein (2), caractérisé en ce que les moyens pneumatiques (40) sont raccordés à la seconde chambre de travail (6) au moyen d'une bride (80), prévue sur le boîtier d'amplificateur (10), qui est pourvue d'un raccord pneumatique (56) et qui délimite avec le boîtier d'amplificateur (10), ainsi qu'avec un boîtier de valve de commande (51), une chambre (63) pouvant être mise à l'atmosphère ou être mise en dépression.

2. Système de freinage, pour véhicule automobile, suivant la revendication 1, caractérisé en ce que les moyens pneumatiques (39, 40) sont constitués chacun de deux valves à 2 voies/2 positions (391, 392 ou 401,402) qui sont agencées de façon à pouvoir être mises sous tension par des signaux de commande du circuit électronique central de régulation (33).

3. Système de freinage, pour véhicule automobile, suivant la revendication 2, caractérisé en ce que les valves à 2 voies/2 positions (391, 392, 401, 402) sont réalisées sous la forme de valves électromagnétiques ouvertes en l'absence de courant (391, 402) et de valves électromagnétiques fermées en l'absence de courant (392, 402).

4. Système de freinage, pour véhicule automobile, suivant la revendication 1, caractérisé en ce que les moyens pneumatiques (39, 40) sont constitués chacun d'une valve électromagnétique à 3 voies/2 positions raccordées chacune à l'une des deux chambres de travail (5 ou 6).

5. Système de freinage, pour véhicule automobile, suivant la revendication 1, caractérisé en ce que la bride (80) porte des moyens (75) de fixation sur une paroi de carrosserie.

6. Système de freinage, pour véhicule automobile, suivant la revendication 1 ou 5, caractérisé en ce que le boîtier de valve de commande (51) comporte un prolongement axial (64) qui est guidé de manière étanche dans la bride (80).

7. Système de freinage, pour véhicule automobile, suivant la revendication 6, caractérisé en ce que le prolongement axial (64) comporte un alésage (78) dans lequel est guidé, de façon à pouvoir y être déplacé en translation de manière étanche, un bourrelet de guidage (66) d'une tige intermédiaire (77) qui actionne directement la valve de commande (58) et qui est reliée à la tige de piston (11) de façon à coopérer avec cette dernière.

8. Système de freinage, pour véhicule automobile, suivant la revendication 6 ou 7, caractérisé en ce que le prolongement axial (64) est réalisé d'une pièce avec le boîtier de valve de commande (51, 52), tandis que, dans la zone de raccordement entre le boîtier de valve de commande (52) et le prolongement (64), il est prévu des passages (74) qui permettent que la chambre intérieure (76) de la valve de commande (58) soit soumise à l'action pneumatique de la pression régnant dans la chambre (63).

9. Système de freinage, pour véhicule automobile, suivant la revendication 7, caractérisé en ce que l'étanchéité du bourrelet de guidage (66) vis-à-vis de la paroi de l'alésage (78) est assurée au moyen d'une coupelle d'étanchéité (67).

10. Système de freinage, pour véhicule automobile, suivant la revendication 1 ou 5, caractérisé en ce que la bride (80) est fixée sur le boîtier d'amplificateur (10), avec interposition d'une garniture d'étanchéité (81), au moyen de jonctions par vissage (79).

11. Système de freinage, pour véhicule automobile, suivant la revendication 1 ou 5, caractérisé en ce que la chambre (63) est séparée de l'atmosphère environnante par un soufflet (82) qui s'étend entre la bride (80) et la tige de piston (11).

12. Système de freinage, pour véhicule automobile, suivant la revendication 11, caractérisé en ce que le soufflet (82) comprend au moins deux zones radiales de fixation (83) qui sont réalisées d'une manière symétriquement opposée et qui coopèrent avec les éléments de fixation (75) montés sur la bride (80).

13. Système de freinage, pour véhicule automobile, suivant la revendication 12, caractérisé en ce que les zones de fixation (83) comportent des ouvertures (84) pour le passage des éléments de fixation (75).

14. Système de freinage, pour véhicule automobile, suivant l'une des revendications 11 à 13, caractérisé en ce qu'à son extrémité située à l'opposé de la bride (80), le soufflet (82) comporte un bourrelet tubulaire (85) qui est enclenché dans une gorge radiale (86) ménagée dans la tige de piston (11).

15. Système de freinage, pour véhicule automobile, suivant l'une des revendications précédentes, caractérisé en ce qu'un capteur de pression (15), dont le signal de sortie peut être envoyé au circuit électronique central de régulation (33), est raccordé à l'une des deux chambres de travail (5, 6).
